(19) Europäisches Patentamt / European Patent Office / Office européen des brevets

(11) **EP 2 105 380 B1**

(12) **FASCICULE DE BREVET EUROPEEN**

(45) Date de publication et mention
de la délivrance du brevet:
**28.09.2016 Bulletin 2016/39**

(51) Int Cl.:
***B64G 1/36*** *(2006.01)*    ***G01C 21/02*** *(2006.01)*
***G01C 21/24*** *(2006.01)*    ***G01S 3/786*** *(2006.01)*

(21) Numéro de dépôt: **09156490.6**

(22) Date de dépôt: **27.03.2009**

(54) **Méthode d'estimation d'attitude d'un senseur stellaire**

Methode zur Abschätzung der Fluglage eines Sternensensors

Attitude estimation method of a star tracker

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **27.03.2008 FR 0851966**

(43) Date de publication de la demande:
**30.09.2009 Bulletin 2009/40**

(73) Titulaire: **Centre National d'Etudes Spatiales
75001 Paris (FR)**

(72) Inventeur: **Montel, Johan
31401, TOULOUSE CEDEX 9 (FR)**

(74) Mandataire: **Regimbeau
20, rue de Chazelles
75847 Paris Cedex 17 (FR)**

(56) Documents cités:
**WO-A2-03/050630**

• **DATABASE INTERNET [Online] 31 janvier 2002
(2002-01-31), MALAK A. SAMAAN: "Predictive
centroiding for single and multiple FOVs star
trackers" XP007906845 extrait de
HTTP://AERO.TAMU.EDU/PEOPLE/MORTARI/P
UBBL/ 2002/AAS-02-103.PDF**
• **BRADY T ET AL: "Ground validation of the inertial
stellar compass" AEROSPACE CONFERENCE,
2004. PROCEEDINGS. 2004 IEEE, IEEE,
PISCATAWAY, NJ, USA, 6 mars 2004
(2004-03-06), pages 214-226, XP010747980 ISBN:
978-0-7803-8155-1**

## Description

La présente invention concerne une méthode d'estimation d'attitude d'un engin spatial muni d'un senseur stellaire et d'un catalogue d'étoiles embarqué. Elle concerne aussi un équipement pour engin spatial comportant des moyens aptes à mettre en oeuvre ladite méthode.

Les mesures effectuées par les senseurs stellaires sont en effet sujettes à des erreurs dont les sources sont multiples, et de nombreux dispositifs et méthodes de correction de ces erreurs de mesure existent à ce jour.

Parmi les types d'erreurs existants, on compte :

- L'erreur de bruit temporel, qui désigne une erreur décorrélée d'un pas d'échantillonnage à un autre, également appelée « bruit blanc », souvent représentée comme un bruit gaussien et due entre autres phénomènes au bruit de la chaîne électronique d'amplification/lecture, ainsi qu'au bruit photonique.
- L'erreur « fausse étoile », qui désigne une perturbation due à un corps étranger dans le champ, soit vu comme une étoile, soit venant perturber la mesure d'une étoile, par exemple un proton, une particule énergétique.
- Les erreurs spatiales, qui désignent les erreurs qui, pour une étoile donnée, dépendent de la position de cette étoile dans le champ de vue. On distingue deux types d'erreurs spatiales :

    - L'erreur dite « pixel », dont la longueur de corrélation n'excède pas un voire quelques pixels,
    - L'erreur dite « champ de vue », dont les longueurs de corrélation sont de l'ordre de grandeur de quelques fractions du champ de vue.

Le document US 6 047 226 révèle ainsi une méthode de contrôle d'attitude d'un engin spatial comportant le fait de modéliser des bruits temporels et spatiaux et utiliser un filtre de Kalman se basant sur cette modélisation.

Le document US 6 272 432 révèle quand à lui une méthode de correction d'erreur spatiale comportant le fait de comparer l'attitude estimée dans deux référentiels distincts, l'un inertiel l'autre stellaire, appliquer un filtre de Kalman dont les états caractérisent les erreurs spatiales et dont l'une des matrices de recalage caractérise à la fois les erreurs de biais d'un gyroscope et les erreurs d'attitude, recaler les deux estimations d'attitude et minimiser l'erreur sur ces estimations.

Ces méthodes sont complexes à mettre en oeuvre et nécessitent de lourds calculs.

On connaît du document « Prédictive centroiding for single and multiple FOVs star trackers », Malak A. Samman et al., 31 Janvier 2002, XP 007906845, un procédé d'estimation d'attitude basée sur l'estimation et la prédiction de la position d'étoiles dans une image prise par un senseur stellaire. Les performances, et en particulier l'erreur globale sur toute l'image, associées à un tel procédé sont notamment évaluées avec la présence d'un effet de traîne sur l'image.

Par ailleurs, on connaît du document « Ground validation of the inertial stellar compass », Brady T. et al., 2004 IEEE Aerospace Conference Proceedings, un procédé de validation d'un senseur d'attitude comprenant une caméra. Une modélisation des erreurs spatiales à l'échelle du pixel et à l'échelle du champ de vue est proposée.

De plus, un certain nombre de missions ont des exigences plus sévères que celles auxquelles répondent les senseurs stellaires existants, et c'est dans ce cadre que la présente invention se propose de fournir une méthode simple et efficace d'amélioration de la performance des viseurs stellaires visant à rejeter des erreurs ponctuelles sur une étoile telles que les perturbations protons, à calibrer en vol des erreurs spatiales et à réduire le bruit mono-étoile temporel.

L'invention se propose de pallier au moins un des inconvénients des dispositifs de l'art antérieur et a pour but de proposer une méthode et un équipement permettant d'améliorer l'estimation de l'attitude d'un engin spatial muni d'un catalogue d'étoiles embarqué, par des moyens simples et faciles à mettre en oeuvre.

Dans le processus qui mène de l'acquisition des images de paysages d'étoiles par le senseur stellaire à la détermination de l'attitude de l'engin spatial sur lequel est installé ledit senseur stellaire, il y a deux étapes qui viennent en amont et en aval de l'utilisation des distances inter-étoiles conformément à la présente invention.

En amont du calcul ou de la mesure des distances inter-étoiles, il est nécessaire d'identifier le paysage d'étoiles observé. Les méthodes d'identification sont nombreuses et bien connues de l'homme du métier, et c'est pourquoi nous ne nous attarderons pas à les décrire ici.

En aval de l'estimation des erreurs de mesure de position des étoiles, la détermination de l'attitude d'un engin spatial sur lequel est installé un senseur stellaire à partir des directions des étoiles est un procédé connu de l'homme du métier qui comporte le calcul de l'orientation du senseur en déterminant les quaternions d'attitude.

L'invention propose donc une méthode d'estimation d'attitude d'un senseur stellaire muni d'un catalogue d'étoiles embarqué, selon la revendication 1, ainsi qu'un équipement mettant en oeuvre cette méthode.

D'autres caractéristiques, buts et avantages de la présente invention apparaîtront à la lecture de la description détaillée qui va suivre, et en regard des dessins annexés, donnés à titre d'exemples non limitatifs et sur lesquels :

- la figure 1 représente une vue schématique d'un équipement pour engin spatial conforme à la présente invention,

- la figure 2 représente un premier mode de réalisation de l'invention permettant de calibrer des erreurs spatiales,
- la figure 3 représente une évolution temporelle d'une estimation de biais en radians pour 16 zones du champ, 1600 zones au total, 12 jours de simulation, 12 étoiles dans le champ, une fréquence du senseur stellaire 1 de 10Hz,
- la figure 4 représente une évolution temporelle d'une amplitude d'une erreur pixel pour 16 zones du champ, 1600 zones au total, 12 jours de simulation, 12 étoiles dans le champ, une fréquence du senseur stellaire 1 de 10Hz,
- la figure 5 représente un second mode de réalisation de l'invention permettant de détecter des biais mono-étoiles,
- la figure 6 représente un tableau de performances d'estimation du biais,
- la figure 7 représente un tableau de probabilités d'occurrence de rejet d'étoile conforme au second mode de réalisation de l'invention,
- la figure 8 représente un autre tableau de probabilités d'occurrence de rejet d'étoile conforme au second mode de réalisation de l'invention, et
- la figure 9 représente un dernier tableau de probabilités d'occurrence de rejet d'étoile conforme au second mode de réalisation de l'invention.

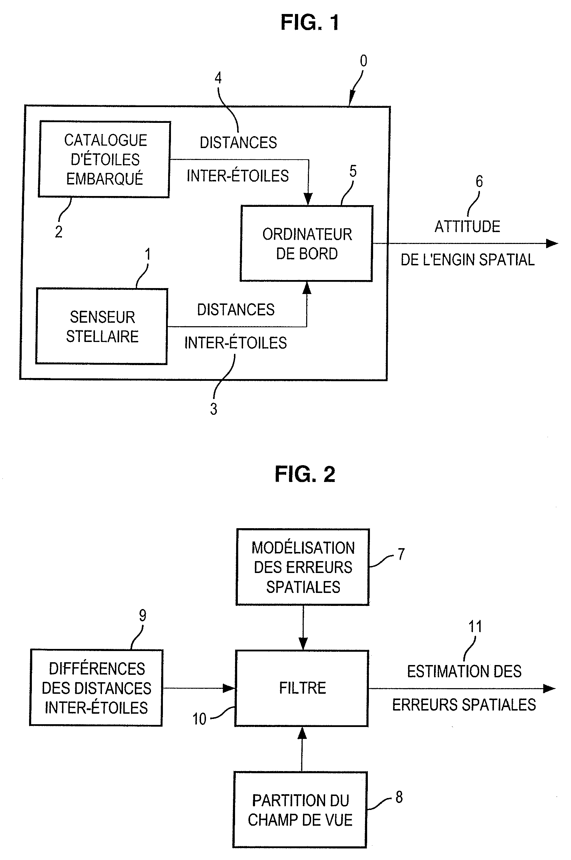

Comme illustré sur la figure 1, la méthode concerne tout engin spatial sur lequel est installé au moins un équipement 0 comportant au moins un senseur stellaire 1, un ordinateur de bord 5 et un catalogue d'étoiles embarqué 2 qui contient la direction de certaines étoiles dans un repère inertiel.

La précision sur les directions de ces étoiles étant très bonne relativement aux précisions de mesure des senseurs usuels, cette information est prise en référence.

De cette information absolue de directions, il est possible de tirer des informations relatives de distances angulaires entre les étoiles, appelées distances inter-étoiles.

L'intérêt de cette information relative est qu'elle ne dépend pas de l'attitude 6 du senseur 1 : ainsi, quelle que soit l'attitude 6, la distance angulaire 3 entre deux étoiles mesurées en axes relatifs au senseur stellaire 1 est égale, aux erreurs de mesure près, à la distance angulaire 4 entre ces deux étoiles calculées à partir des informations du catalogue embarqué.

Ainsi qu'illustré sur la figure 1, pour chaque couple d'étoiles dont le senseur stellaire 1 mesure la distance inter-étoile, il est possible d'avoir accès à une information sur la précision de la mesure en comparant la distance inter-étoile 3 mesurée par le senseur stellaire 1 à la distance inter-étoile 4 calculée à partir des informations du catalogue, cela via un ordinateur de bord 5.

Selon un premier mode de réalisation, la méthode permet une calibration en vol des erreurs spatiales.

La première étape 7 peut comporter le fait de modéliser les deux types d'erreurs spatiales.

Les sources principales des erreurs champ de vue sont des défauts optiques qui créent des aberrations induisant des biais sur les mesures de positions d'étoiles.

Ces erreurs sont modélisées par un vecteur à deux dimensions dont les composantes $B_x$ et $B_y$ sont des fonctions lentement variables dans le champ et continues :

$$\vec{\varepsilon}_{FOV}(x, y) = \begin{bmatrix} B_x(x, y) \\ B_y(x, y) \end{bmatrix}$$

La source principale des erreurs pixel est le calcul du barycentre de la tache étoile, erreur de l'ordre du centième de pixel.

Ces erreurs sont modélisées par un vecteur à deux dimensions dont les composantes sont des sinus d'amplitude variable dans le champ, de période égale à un pixel, dont la phase est telle que l'erreur est nulle lorsque l'étoile est centrée sur un pixel :

$$\vec{\varepsilon}_{pixel}(x, y) = \begin{bmatrix} A_x(x, y)\sin\left(2\pi\,\dfrac{x}{p_x}\right) \\ A_y(x, y)\sin\left(2\pi\,\dfrac{y}{p_y}\right) \end{bmatrix}$$

où $A_x$ et $A_y$ sont les amplitudes de l'erreur en x et y, $p_x$ et $p_y$ les tailles des pixels en x et y.

Ces amplitudes sont supposées lentement variables dans le champ.

La seconde étape 8 peut comporter le fait de partitionner le champ de vue en un nombre $z^2$ de zones élémentaires, les paramètres $B_x$, $B_y$, $A_x$ et $A_y$ prenant des valeurs différentes dans chacune des zones élémentaires.

Ce quadrillage permet de discrétiser le calcul qui conduit à l'estimation des erreurs spatiales. La valeur des paramètres ne dépend que de la zone dans laquelle l'étoile se situe. En tout point d'une zone élémentaire, chaque paramètre possède une même unique valeur propre à la zone en question, et ces valeurs sont différentes pour deux zones différentes.

Ainsi, pour caractériser complètement les erreurs spatiales il suffit d'identifier avec une bonne précision les $z^2$ valeurs de $B_x$, les $z^2$ valeurs de $B_y$, les $z^2$ valeurs de $A_x$ et les $z^2$ valeurs de $A_y$, soit $4z^2$ paramètres à estimer.

L'expérience a montré qu'une valeur de z réalisant un bon compromis entre le nombre de paramètres à estimer, la place mémoire nécessaire et la précision du modèle est z = 40.

La troisième étape 9 peut comporter le fait d'exprimer la différence entre les distances inter-étoiles 4 calculées à partir des informations du catalogue d'étoiles embarqué 2 et les distances inter-étoiles 3 mesurées par le senseur stellaire 1. La notion de distance angulaire inter-étoile est exprimée par le produit scalaire entre deux mesures de direction étoile :

$$Y_{ij} = u_i . u_j$$

Cette distance angulaire inter-étoile peut être obtenue à partir des directions étoiles mesurées, $Y_{ij}^{mes} = u_i^{mes} . u_j^{mes}$, ou à partir des directions étoiles calculées à partir d'informations catalogue, $Y_{ij}^{catalogue} = u_i^{catalogue} . u_j^{catalogue}$. La différence entre la mesure $Y_{ij}^{mes}$ et l'expression de ce produit scalaire émanant des informations catalogue $Y_{ij}^{catalogue}$ peut s'exprimer comme suit :

$$Y_{ij}^{catalogue} = Y_{ij}^{mes} + L' \cdot \begin{bmatrix} B_{xi} \\ B_{yi} \\ B_{xj} \\ B_{yj} \\ A_{xi} \\ A_{yi} \\ A_{xj} \\ A_{yj} \end{bmatrix}$$

avec L' fonction des mesures et des phases pixel :

$$L' = \begin{bmatrix} u_{zi}^{mes} u_{yj}^{mes} - u_{yi}^{mes} u_{zj}^{mes} \\ u_{zi}^{mes} u_{xj}^{mes} + u_{xi}^{mes} u_{zj}^{mes} \\ u_{zj}^{mes} u_{yi}^{mes} - u_{yj}^{mes} u_{zi}^{mes} \\ u_{zj}^{mes} u_{xi}^{mes} + u_{xj}^{mes} u_{zi}^{mes} \end{bmatrix}^T \cdot \begin{bmatrix} 1 & 0 & 0 & 0 & \sin\varphi_{xi} & 0 & 0 & 0 \\ 0 & 1 & 0 & 0 & 0 & \sin\varphi_{yi} & 0 & 0 \\ 0 & 0 & 1 & 0 & 0 & 0 & \sin\varphi_{xj} & 0 \\ 0 & 0 & 0 & 1 & 0 & 0 & 0 & \sin\varphi_{yj} \end{bmatrix}$$

les valeurs $Ax_k$, $Ay_k$, $Bx_k$ et $By_k$ étant les valeurs des paramètres à estimer qui correspondent à la zone occupée par l'étoile n°k, k allant de 1 au nombre d'étoiles n.

La quatrième étape 10 comporte le fait d'utiliser un filtre d'estimation pour recaler un vecteur d'état formé par les amplitudes des erreurs spatiales à partir des distances inter-étoiles calculées 4 et des distances inter-étoiles mesurées 3.

Pour cela, un vecteur d'inconnues $\vec{X}$ formé des amplitudes $Ax_i$, $Ay_i$, $Bx_i$, $By_i$, des erreurs spatiales est constitué et la dérivée partielle des $Y_{ij}^{mes}$ par rapport à $\vec{X}$ est calculée :

$$H^T = \frac{\partial Y_{ij}^{mes}}{\partial X} = \begin{bmatrix} (u_{zi}^{mes} \, u_{yj}^{mes} - u_{yi}^{mes} \, u_{zj}^{mes}) \\ (-u_{zi}^{mes} \, u_{xj}^{mes} + u_{xi}^{mes} \, u_{zj}^{mes}) \\ (u_{zj}^{mes} \, u_{yi}^{mes} - u_{yj}^{mes} \, u_{zi}^{mes}) \\ (-u_{zj}^{mes} \, u_{xi}^{mes} + u_{xj}^{mes} \, u_{zi}^{mes}) \\ (u_{zi}^{mes} \, u_{yj}^{mes} - u_{yi}^{mes} \, u_{zj}^{mes}) \sin \varphi_{xi} \\ (-u_{zi}^{mes} \, u_{xj}^{mes} + u_{xi}^{mes} \, u_{zj}^{mes}) \sin \varphi_{yi} \\ (u_{zj}^{mes} \, u_{yi}^{mes} - u_{yj}^{mes} \, u_{zi}^{mes}) \sin \varphi_{xj} \\ (-u_{zj}^{mes} \, u_{xi}^{mes} + u_{xj}^{mes} \, u_{zi}^{mes}) \sin \varphi_{yj} \end{bmatrix}$$

Le filtre d'estimation proposé peut être un simple filtre de type moindres carrés récursifs, ou Kalman à gain constant.

Le vecteur d'état $X_k$ formé des erreurs spatiales est initialisé à 0 et est recalé à chaque pas d'indice.

L'équation de recalage au pas k, k allant de 1 à n(n-1)/2, est la suivante :

$$X_{k+1} = X_k + K_k H_k Y_k \text{ avec } H_k = \frac{\partial Y_k}{\partial X} \ , \ K_k = P H_k^T \left( H_k P H_k^T + R \right)^{-1}$$

$X_k$ étant le vecteur d'état formé des erreurs spatiales,

$H_k$ la matrice d'observation,

P la matrice de covariance de l'état estimé (constante),

R la matrice de covariance des distances inter-étoiles,

$Y_k$ le vecteur de mesure au pas d'indice k composé des $Y_{ij}^{mes} - Y_{ij}^{catalogue}$ calculés à chaque pas d'indice.

Le vecteur d'état étant de taille importante, les matrices P et R sont réduites à des scalaires.

La matrice R représente la covariance des distances inter-étoiles. Les bruits de mesure étant des bruits mono-étoile gaussiens, indépendants deux à deux et d'écart-type σ, la matrice R se calcule simplement :

$$\text{VAR}(Y) = E[(Y - E(Y))^2]$$

$$R_{ij} = E(\Delta u \cdot \Delta u) = E(\Delta u^2) = \sigma^2 \cdot \left[ \left(u_1^{reel}(3) \cdot u_2^{reel}(1)\right)^2 + \left(u_1^{reel}(3) \cdot u_2^{reel}(2)\right)^2 + \left(u_1^{reel}(1) \cdot u_2^{reel}(3)\right)^2 \right.$$

$$\left(u_1^{reel}(2) \cdot u_2^{reel}(3)\right)^2 + \left(u_2^{reel}(3) \cdot u_1^{reel}(1)\right)^2 + \left(u_2^{reel}(3) \cdot u_1^{reel}(2)\right)^2 + \left(u_2^{reel}(1) \cdot u_1^{reel}(3)\right)^2 +$$

$$\left(u_2^{reel}(2) \cdot u_1^{reel}(3)\right)^2 - 4\left(u_2^{reel}(1) \cdot u_1^{reel}(1) + u_1^{reel}(2) \cdot u_2^{reel}(2)\right)$$

En faisant la simplification : $u_i(3) \approx u_j(3) \approx 1$

$$R_{ij} = 2 \cdot \sigma^2 \cdot \left( \left( u_{xi} - u_{xj} \right)^2 + \left( u_{yi} - u_{yj} \right)^2 \right)$$

La phase des erreurs pixels étant dépendante de la mesure de la position des étoiles par rapport aux pixels, un bruit étoile de 10" (1σ), qui correspond à environ 1/10 de pixel engendre une erreur de phase de l'ordre de 36°.

Il est donc nécessaire de vérifier que la criticité de cette erreur de phase est minime. Des simulations ont ainsi été réalisées en testant différents jeux de réglage, faisant varier plusieurs paramètres dont la durée de la simulation, le nombre de zones élémentaires et la constante de temps du simulateur.

Des hypothèses simplificatrices ont été réalisées, le but étant de vérifier la faisabilité de la méthode. Ainsi, les bruits mono-étoiles sont supposés gaussiens, indépendants deux à deux et d'écart-type σ. La magnitude, la longueur d'onde et la température des étoiles n'ont ainsi pas été prises en compte.

Les simulations effectuent, pour un nombre donné de tirages de paysages d'étoiles :

- un tirage aléatoire des positions des étoiles dans le champ,

- un tirage gaussien de bruits mono-étoiles sur les étoiles considérées,

- le calcul et la mesure des distances inter-étoiles,

- le recalage de l'état estimé selon les équations précédentes,

- des statistiques (moyenne, écart type) des erreurs d'estimation,

- des tracés temporels.

On peut ainsi choisir, dans l'optique d'obtenir une convergence en 6 jours un réglage tel que le nombre de zones élémentaires soit égal à 40 x 40 = 1600 zones, pour un paysage de 12 étoiles dans le champ de vue mesurées à une fréquence de 10 Hz, ces deux derniers paramètres étant représentatifs du cas du senseur stellaire 1 SED 36.

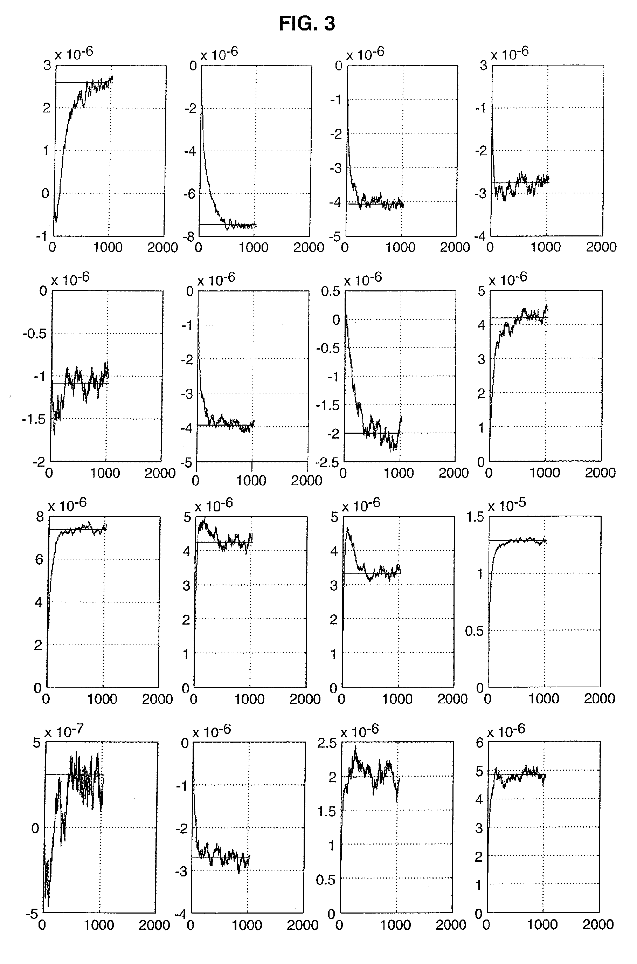

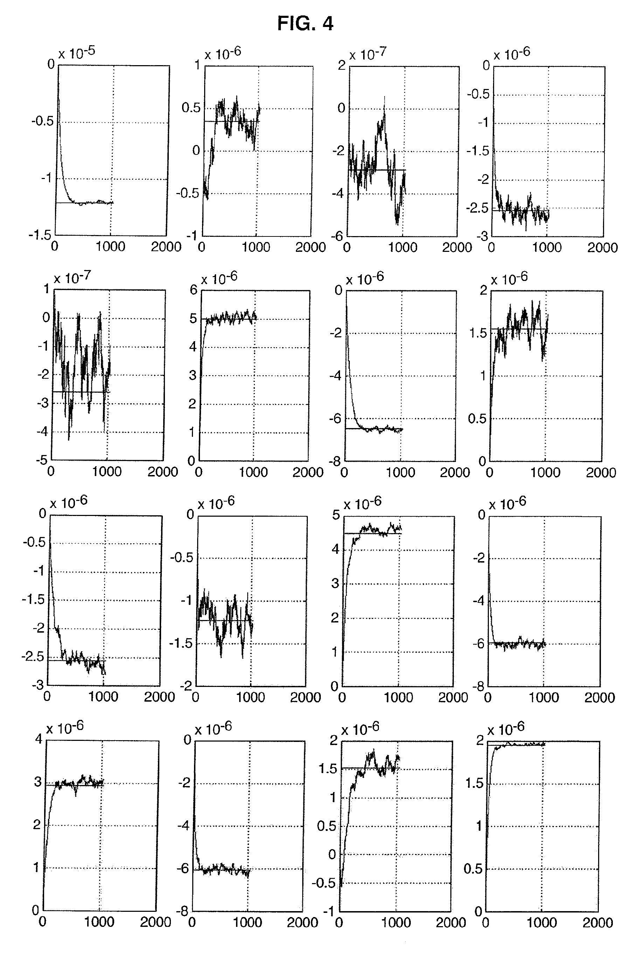

Les résultats de ces simulations sont représentés sur les figures 3 et 4. On y voit l'évolution temporelle sur 12 jours de l'estimation des biais et erreurs pixels pour 16 zones du champ parmi 1600.

Le terme de covariance P a été réglé à 0.1μrad pour les termes de biais et d'amplitude de l'erreur pixel.

Potentiellement, la performance d'estimation pourrait être encore améliorée en augmentant le temps de convergence, en baissant la valeur de la matrice de covariance P du filtre par exemple.

Le meilleur nombre de zones élémentaires résulte du compromis entre la vitesse de convergence de la méthode et la performance d'estimation.

En effet, un nombre important de zones élémentaires garantit une très bonne performance d'estimation mais entraîne par ailleurs une longue durée de convergence ainsi qu'un besoin important en place mémoire.

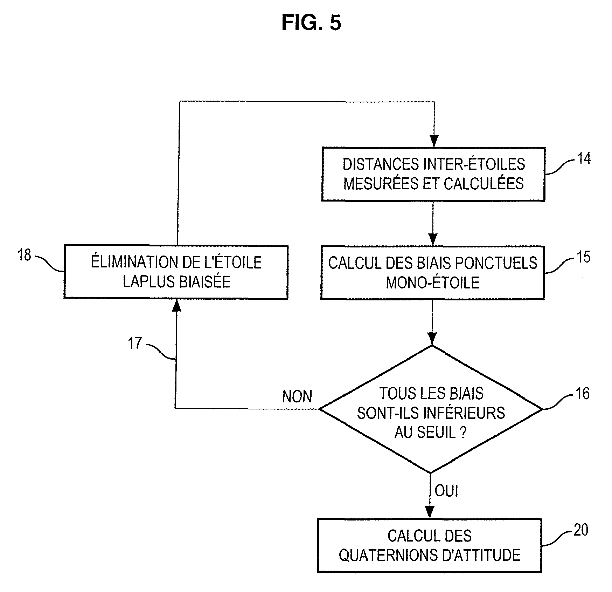

Selon un second mode de réalisation illustré sur la figure 5, la méthode permet de détecter des erreurs de type « fausse étoile », qui désignent une perturbation due à un corps étranger dans le champ, soit vu comme une étoile, soit venant perturber la mesure d'une étoile, par exemple un proton ou une particule énergétique.

Nous adopterons ici pour plus de clarté un formalisme mathématique dit « dans le plan » où les mesures étoiles sont représentées en deux dimensions (x,y) ce qui n'est nullement limitatif par rapport à la méthode exposée.

La première étape 14 est le calcul de la différence des carrés des distances inter-étoiles 3 mesurées par le senseur stellaire 1 et des distances inter-étoiles 4 calculées à partir des informations du catalogue d'étoiles embarqué 2 :

$$\Delta d_{ij}^{2} = d_{ij,m}^{2} - d_{ij}^{2} = \left( x_{im} - x_{jm} \right)^2 + \left( y_{im} - y_{jm} \right)^2 - \left( x_i - x_j \right)^2 - \left( y_i - y_j \right)^2 ,$$

où $d_{ij,m}$ est la distance mesurée par le senseur stellaire, $d_{ij}$ la distance calculée à partir des informations du catalogue d'étoiles embarqué 2, $(x_i, y_i)$ les coordonnées angulaires cartésiennes de l'étoile i répertoriées dans le catalogue d'étoiles embarqué 2, $(x_{im}, y_{im})$ les coordonnées angulaires cartésiennes de l'étoile i mesurées dans le repère du senseur stellaire 1.

En supposant les biais de mesures ε faibles devant les coordonnées étoiles, un développement au premier ordre donne :

$$\Delta d_{ij}{}^2 = 2(x_i - x_j)(\varepsilon_{xi} - \varepsilon_{xj}) + 2(y_i - y_j)(\varepsilon_{yi} - \varepsilon_{yj}) + o(\varepsilon)$$

La seconde étape 15 comporte le fait de calculer à partir de $\Delta d_{ij}{}^2$ l'erreur fausse étoile sur une étoile donnée indicée j. Cette erreur se traduit par un biais de mesure anormalement élevé par rapport au bruit habituellement attendu sur l'étoile j.

Soit $\bar{b}_j = \begin{bmatrix} b_{xj} \\ b_{yj} \end{bmatrix}$ le biais de mesure de l'étoile j à l'instant de mesure t.

Les coordonnées mesurées de l'étoile j sont donc

$$x_{mj} = x_j + b_{xj}$$

$$y_{mj} = y_j + b_{yj}$$

Les n -1 autres étoiles sont supposées non biaisées. Les biais de mesure commis sur les autres étoiles correspondent par conséquent au niveau de bruit mono-étoile.

Pour i≠j, nous avons donc :

$$x_{mi} = x_i + \varepsilon_{xi}$$

$$y_{mi} = y_i + \varepsilon_{yi}$$

Soit

$$\Delta d_{ij}{}^2 \approx 2(x_i - x_j)(\varepsilon_{xi} - b_{xj}) + 2(y_i - y_j)(\varepsilon_{yi} - b_{yj}) \approx 2b_{xj}(x_{mj} - x_{mi}) + 2b_{yj}(y_{mj} - y_{mi})$$

A partir des n - 1 équations précédentes, un système conduisant au calcul du biais de mesure sur l'étoile j est obtenu :

$$A_j X_j = Y_j, \text{ avec } A_j = 2\begin{bmatrix} x_{mj} - x_{m1} & y_{mj} - y_{m1} \\ x_{mj} - x_{m2} & y_{mj} - y_{m2} \\ ... & ... \\ x_{mj} - x_{mn} & y_{mj} - y_{mn} \end{bmatrix},$$

A de taille (n-1,2), $X_j = \begin{bmatrix} b_{xj} \\ b_{yj} \end{bmatrix}$ vecteur d'inconnues de taille (2,1) et $Y_j = \begin{bmatrix} \Delta d_{j1}^2 \\ \Delta d_{j2}^2 \\ ... \\ \Delta d_{jn}^2 \end{bmatrix}$ vecteur de mesure de taille (n-1,1).

Dans le cas où le nombre d'étoiles n mesurées est supérieur ou égal à 2, la résolution optimale classique par moindres carrés est possible par pseudo inverse, donnant le résultat suivant :

$$\widetilde{X}_j = (A^T * A)^{-1} A^T$$

Ce calcul engendre la simple inversion d'une matrice 2*2.

Ainsi, en supposant que seule l'étoile n°j est biaisée et que ce biais est grand devant les bruits mono-étoile, il est possible de calculer la valeur du biais sur l'étoile j grâce aux calculs des distances inter-étoiles.

Afin de ne pas pondérer trop faiblement des mesures de distances inter-étoiles d'étoiles trop proches l'une de l'autre, il convient de normaliser les lignes de la matrice A en divisant chaque ligne du vecteur de mesure Y par la norme du vecteur $\begin{bmatrix} x_{mj} - x_{mi} \\ y_{mj} - y_{mi} \end{bmatrix}$.

La troisième étape 16 comporte le fait de tester si tous les biais calculés sont inférieurs en norme à un seuil donné au dessus duquel une étoile est considérée comme étant biaisée.

Une étoile est dite biaisée lorsqu'elle présente une erreur de mesure supérieure à une certaine limite, en pratique plus grande que la valeur 30" ($3\sigma$) du bruit mono-étoile.

Il faut avant de mener à bien la troisième étape déterminer le meilleur seuil de rejet d'étoiles présentant un biais déterminé. La valeur du biais à partir duquel une étoile est rejetée sera prise par exemple égal à 90", valeur correspondant à un pixel du senseur stellaire 1 SED16. Le meilleur seuil de rejet d'étoiles est un seuil permettant d'atteindre les objectifs suivants :

- Objectif 1 : Ne pas rejeter d'étoiles lorsqu'aucune étoile du champ n'est réellement biaisée.

- Objectif 2 : Détecter une étoile qui présente un biais supérieur à une valeur limite donnée de manière à rejeter sa mesure avec une probabilité suffisante.

- Objectif 3 : Ne pas rejeter une autre étoile non biaisée lorsqu'une étoile biaisée est dans le champ (on parle alors de mauvaise détection).

- Objectif 4 : Limiter les perturbations induites par une étoile faiblement biaisée, c'est-à-dire une étoile dont le biais est inférieur à 90".

Pour atteindre l'objectif 1, la valeur du seuil de rejet d'une étoile doit être supérieure à la performance d'estimation des biais. La performance $\sigma_0$ d'estimation des biais étant la précision avec laquelle un biais est déterminé, il est nécessaire de faire des simulations qui fournissent un ordre de grandeur de cette performance.

Pour cela, on ne simule qu'une étoile biaisée parmi n. On simule un biais sur cette étoile de 180", ce qui correspond à environ deux pixels du senseur stellaire 1 SED16. On simule des bruits mono-étoile de valeur 30" soit $3\sigma$ par étoile.

On réalise alors 1000 tirages aléatoires de paysages d'étoiles et on étudie la sensibilité des résultats statistiques en fonction du nombre d'étoiles n.

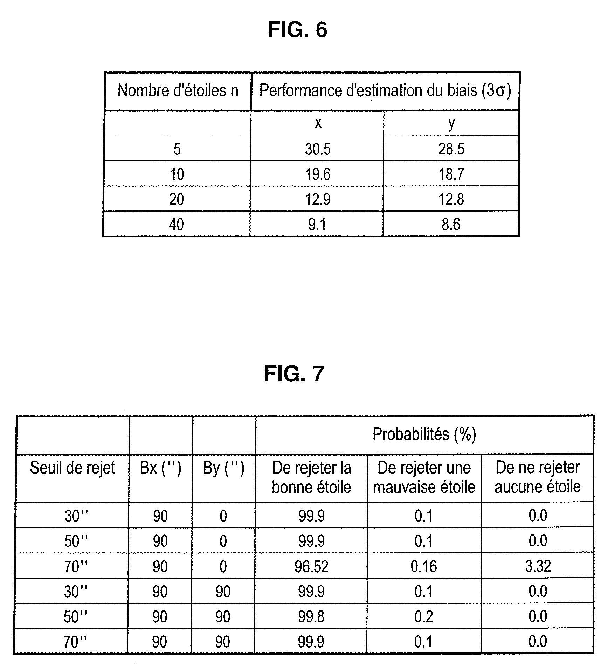

La figure 6 représente les performances $\sigma_0$ d'estimation du biais pour différentes valeurs de n.

On voit ainsi que pour 10 étoiles, le biais détecté varie entre 180"-19.6" et 180"+19.6" sur l'axe des abscisses et 180"-18.7" et 180+18.7" sur l'axe des ordonnées. Soit une détection du biais en arcsecondes dans l'intervalle [160.4 ; 199.6] suivant l'axe des abscisses et [161.3 ; 198.7] suivant l'axe des ordonnées.

Pour atteindre l'objectif 1, il faut donc déterminer la performance $\sigma_0$ d'estimation des biais et choisir une valeur de seuil de rejet supérieure à cette performance.

Pour atteindre l'objectif 2, il est nécessaire de choisir une valeur inférieure à la valeur du biais maximal autorisé auquel on soustrait la performance $\sigma_0$ d'estimation des biais. Par exemple, si l'on veut rejeter des étoiles réellement biaisées de 90", il est alors nécessaire de fixer le seuil à une valeur inférieure à 90"-$3\sigma_0$.

Pour atteindre l'objectif 3, il est nécessaire de calculer l'impact d'un biais étoile sur l'estimation des n-1 autres biais étoiles. En effet, l'impact d'un biais étoile sur les estimations des autres biais est proportionnel au biais lui-même et dépend grandement de la configuration géométrique du paysage d'étoiles.

Même s'il est statistiquement très rare de trouver des configurations défavorables rendant très difficile la détection de l'étoile biaisée, des simulations doivent être effectuées pour fixer la meilleure valeur du seuil de rejet.

Les simulations effectuent donc pour plusieurs valeurs de seuil de rejet :

- un tirage d'un grand nombre de paysages de 10 étoiles,
- un biais fixe b = [$b_x$, $b_y$] sur une seule étoile j parmi n à chaque tirage de paysage étoiles,
- une estimation des n biais étoile.

Plusieurs cas sont alors possibles :

- Cas 1 : Le biais maximum estimé correspond à l'étoile j et ce biais estimé est supérieur au seuil de rejet. Ce cas correspond au cas où la détection d'étoile a été bonne.

- Cas 2 : Le biais maximum estimé ne correspond pas à l'étoile j et ce biais est supérieur au seuil de rejet. Ce cas correspond au cas où une mauvaise étoile a été rejetée.

- Cas 3 : Tous les biais estimés sont inférieurs au seuil de rejet. Ce cas correspond au cas où aucune étoile n'a été rejetée.

Les probabilités d'occurrence des cas 1, 2 et 3 sont ainsi calculées pour plusieurs valeurs de seuil de rejet et plusieurs valeurs de biais et sont représentées sur la figure 7.

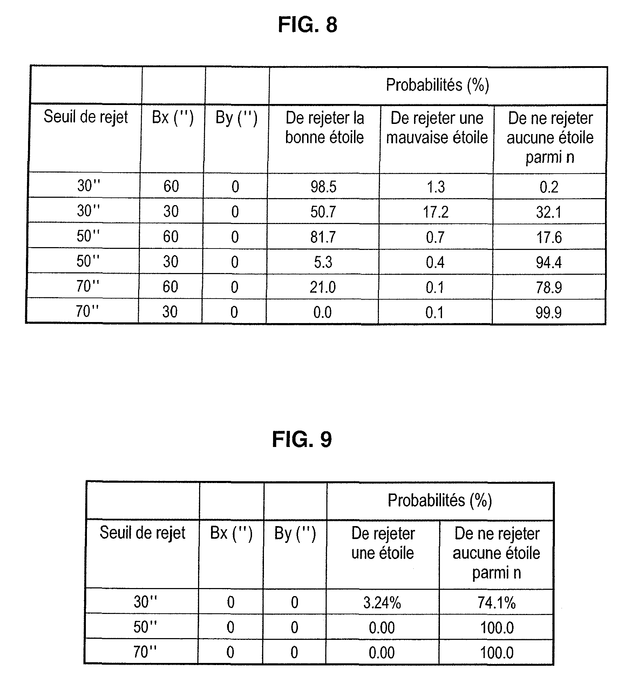

Pour atteindre l'objectif 4, il est de plus nécessaire de vérifier que des faibles biais ne perturbent pas la détection. Les probabilités d'occurrence des cas 1, 2 et 3 sont calculées pour de faibles valeurs de biais et plusieurs valeurs de seuil de rejet, et sont représentées sur la figure 8.

La figure 9 représente en outre les probabilités d'occurrence des cas 1, 2 et 3 lorsqu'il n'y a aucun biais.

Les simulations font ainsi apparaître que pour un bruit mono-étoile de 30" ($3\sigma$), en considérant qu'une étoile est biaisée lorsque son biais est supérieur à 30", un paysage de 10 étoiles dans le champ de vue, et un objectif qui est de rejeter efficacement des étoiles présentant un biais supérieur à 90", on constate qu'un choix de seuil de l'ordre de 30" induit trop de rejets intempestifs en présence de biais faibles ou en l'absence de biais.

En revanche, des seuils de l'ordre de 50" à 70" permettent d'atteindre tous les objectifs fixés.

Le choix du seuil doit donc se faire en fonction des étoiles que l'on souhaite rejeter. Si l'on souhaite rejeter efficacement des étoiles présentant un biais assez faible, de l'ordre de 60" par exemple, il faudra choisir un seuil de rejet inférieur à 50".

Il est à noter que plus on baisse ce seuil, plus le risque de rejeter des étoiles non biaisées augmente, ce qui n'est pas un réel problème, puisque l'estimation des n-1 biais qui suit la rejection d'une étoile suite à l'estimation des n biais laisse suffisamment de chance d'éliminer l'étoile biaisée.

Une fois le seuil choisi, la troisième étape 16 qui comporte le fait de tester si tous les biais calculés sont inférieurs en norme audit seuil au dessus duquel une étoile est considérée comme étant biaisée peut être menée à bien.

La quatrième étape 17 comporte alors le fait de recommencer les étapes suivantes lorsqu'au moins une étoile présente un biais supérieur en norme audit seuil en ayant préalablement éliminé de l'ensemble fini d'étoiles l'étoile ayant le biais le plus grand en norme 18:

- calcul des différences $\Delta d^2$ des carrés des distances inter-étoiles mesurées 3 par le senseur stellaire 1 et des distances inter-étoiles calculées 4 à partir des informations du catalogue d'étoiles embarqué 2,
- calcul à partir des $\Delta d^2$ de l'erreur « fausse étoile » sur une étoile donnée,
- tester si tous les biais calculés sont inférieurs en norme audit seuil au dessus duquel une étoile est considérée comme étant biaisée,
- recommencer les étapes précédentes lorsqu'au moins une étoile présente un biais supérieur en norme audit seuil en ayant préalablement éliminé de l'ensemble fini d'étoiles l'étoile ayant le biais le plus grand en norme.

Plusieurs étoiles biaisées peuvent ainsi être détectées. De plus, même si une étoile non biaisée est rejetée lors de la première boucle de calcul, il est possible d'estimer l'étoile réellement biaisée lors de la seconde boucle, ce qui garantit la détection d'une étoile biaisée.

Le nombre de boucles à effectuer est en général limité à deux, voire trois dans des cas très rares.

## Revendications

1. Méthode d'estimation d'attitude (6) d'un engin spatial muni d'un senseur stellaire (1) et d'un catalogue d'étoiles embarqué (2), comportant une calibration d'erreurs spatiales, ladite méthode comprenant une étape dite troisième étape (9) consistant à exprimer la différence de distances angulaires inter-étoiles (3) mesurées par le senseur stellaire (1) en axes relatifs audit senseur stellaire (1) et de distances angulaires inter-étoiles (4) calculées à partir des informations du catalogue d'étoiles embarqué (2), et étant **caractérisée en ce que**, pour la calibration des erreurs spatiales, elle comporte les étapes (7, 9, 10) consistant à:

- première étape (7): modéliser les erreurs spatiales à l'échelle du pixel et du champ de vue du senseur stellaire (1),
- seconde étape (8): partitionner le champ de vue en zones élémentaires, à chaque zone étant associé une valeur d'erreur spatiale à l'échelle du champ de vue et une valeur d'amplitude d'erreur spatiale à l'échelle du pixel,

- quatrième étape (10): utiliser un filtre d'estimation pour recaler un vecteur d'état formé par les amplitudes des erreurs spatiales à partir de la différence des distances inter-étoiles (4) calculées et des distances inter-étoiles (3) mesurées,

les trois premières étapes (7, 8, 9) étant permutables.

2. Méthode selon la revendication 1, **caractérisée en ce que** l'expression de la différence de distances angulaires inter-étoiles (3) mesurées par le senseur stellaire (1) en axes relatifs audit senseur stellaire (1) et de distances angulaires inter-étoiles (4) calculées à partir des informations du catalogue d'étoiles embarqué (2) consiste à exprimer la différence de produits scalaires de directions étoiles mesurées et de produits scalaires de directions étoiles calculées à partir d'informations catalogue.

3. Méthode selon l'une des revendications 1 et 2, **caractérisée en ce que** les erreurs spatiales à l'échelle du champ de vue sont de la forme :

$$\vec{\varepsilon}_{FOV}(x, y) = \begin{bmatrix} B_x(x, y) \\ B_y(x, y) \end{bmatrix},$$

où $B_x$ et $B_y$ sont des fonctions continues.

4. Méthode selon l'une des revendications 1 à 3, **caractérisée en ce que** les erreurs spatiales à l'échelle du pixel sont de la forme :

$$\vec{\varepsilon}_{pixel}(x, y) = \begin{bmatrix} A_x(x, y) \sin(2\pi \dfrac{x}{p_x}) \\ A_y(x, y) \sin(2\pi \dfrac{y}{p_y}) \end{bmatrix},$$

où $A_x$ et $A_y$ sont les amplitudes de l'erreur en x et y et $p_x$, $p_y$ les tailles en x et y des pixels, x et y représentant la position des étoiles dans le pixel.

5. Méthode selon l'une des revendications 1 à 4, **caractérisée en ce que** le filtre d'estimation (10) utilisé est un filtre de type moindres carrés récursifs ou Kalman à gain constant.

6. Méthode selon l'une des revendications 1 à 5, **caractérisée en ce que** l'équation de recalage au pas k, k allant de 1 au nombre de distances inter-étoiles, est :

$$X_{k+1} = X_k + K_k H_k Y_k \quad avec \quad H_k = \frac{\partial Y_k}{\partial X}, K_k = P H_k^{\ T}(H_k P H_k^{\ T} + R)^{-1},$$

où

$X_k$ est le vecteur d'état formé par les erreurs spatiales,
$Y_k$ le vecteur composé des différences des distances inter-étoiles mesurées (3) et calculées (4),
$H_k$ la matrice d'observation,
$P$ la matrice de covariance de l'état estimé,
$R$ la matrice de covariance des distances inter-étoiles,
$K_k$ la matrice de Kalman.

7. Equipement (0) pour engin spatial, **caractérisé en ce qu'**il comporte des moyens aptes à mettre en oeuvre une méthode d'estimation d'attitude (6) conforme à l'une des revendications 1 à 6.

8. Engin spatial **caractérisé en ce qu'**il comporte au moins un équipement (0) conforme à la revendication 7.

**Patentansprüche**

1. Methode zur Abschätzung der Fluglage (6) eines Raumschiffs, das mit einem Sternensensor (1) und einem On-Board-Sternenkatalog (2) ausgestattet ist, aufweisend eine Raumfehlerkalibrierung, wobei die Methode einen dritten Schritt (9) umfasst, der darin besteht, die Differenz von Winkelabständen zwischen den Sternen (3), gemessen von dem Sternensensor (1), in Achsen relativ zum Sternensensor (1), und von Winkelabständen zwischen den Sternen (4), berechnet auf der Basis von Informationen des On-Board-Sternenkatalogs (2), auszudrücken, und **dadurch gekennzeichnet, dass** sie für die Kalibrierung der Raumfehler die Schritte (7, 9, 10) aufweist, die bestehen in:

   - erster Schritt (7): Modellieren der Raumfehler auf Ebene des Pixels und des Sichtfelds des Sternensensors (1),
   - zweiter Schritt (8): Partitionieren des Sichtfelds in elementare Zonen, wobei jeder Zone ein Raumfehlerwert auf Ebene des Sichtfelds und ein Raumfehleramplitudenwert auf Ebene des Pixels zugeordnet ist,
   - vierter Schritt (10): Verwenden eines Schätzfilters zur Neufeststellung eines Zustandsvektors, gebildet von den Amplituden der Raumfehler auf der Basis der Differenz der berechneten Abstände zwischen den Sternen (4) und der gemessenen Abstände zwischen den Sternen (3),

   wobei die drei ersten Schritte (7, 8, 9) vertauschbar sind.

2. Methode nach Anspruch 1, **dadurch gekennzeichnet, dass** der Ausdruck der Differenz von Winkelabständen zwischen den Sternen (3), gemessen von dem Sternensensor (1), in Achsen relativ zum Sternensensor (1), und von Winkelabständen zwischen den Sternen (4), berechnet auf der Basis von Informationen des On-Board-Sternenkatalogs (2), darin besteht, die Differenz skalarer Produkte gemessener Sternenrichtungen und skalarer Produkte von auf der Basis von Kataloginformationen berechneter Sternenrichtungen auszudrücken.

3. Methode nach einem der Ansprüche 1 und 2, **dadurch gekennzeichnet, dass** die Raumfehler auf Ebene des Sichtfelds der Form:

$$\vec{\varepsilon}_{FOV}(x,y) = \begin{bmatrix} B_x(x,y) \\ B_y(x,y) \end{bmatrix},$$

   entsprechen, wobei $B_x$ und $B_y$ kontinuierliche Funktionen sind.

4. Methode nach einem der Ansprüche 1 bis 3, **dadurch gekennzeichnet, dass** die Raumfehler auf Ebene des Pixels der Form:

$$\vec{\varepsilon}_{pixel}(x,y) = \begin{bmatrix} A_x(x,y)\sin(2\pi\dfrac{x}{p_x}) \\ A_y(x,y)\sin(2\pi\dfrac{y}{p_y}) \end{bmatrix},$$

   entsprechen, wobei $A_x$ und $A_y$ die Amplituden des Fehlers in x und y sind und $p_x$, $p_y$ die Größen in x und y der Pixel sind, wobei x und y die Position der Sterne in dem Pixel darstellen.

5. Methode nach einem der Ansprüche 1 bis 4, **dadurch gekennzeichnet, dass** der verwendete Schätzfilter (10) ein Filter des Typs rekursive kleinste Quadrate oder Kalman mit konstantem Gain ist.

6. Methode nach einem der Ansprüche 1 bis 5, **dadurch gekennzeichnet, dass** die Neufeststellungsgleichung mit dem Schritt k, wobei k von 1 bis zur Anzahl von Abständen zwischen den Sternen reicht, ist:

$$X_{k+1} = X_k + K_k H_k Y_k \quad mit \quad H_k = \frac{\partial Y_k}{\partial X}, K_k = PH_k^T(H_k PH_k^T + R)^{-1},$$

   wobei $X_k$ der von den Raumfehlern gebildete Zustandsvektor ist,

$Y_k$ der von den Differenzen der gemessenen (3) und berechneten (4) Abstände zwischen den Sternen zusammengesetzte Vektor ist,
$H_k$ die Beobachtungsmatrix ist,
P die Kovarianzmatrix des geschätzten Zustands ist,
$R$ die Kovarianzmatrix der Abstände zwischen den Sternen ist,
$K_k$ die Kalman-Matrix ist.

**7.** Ausrüstung (0) für Raumschiff, **dadurch gekennzeichnet, dass** sie Mittel aufweist, die imstande sind, eine Methode zur Abschätzung der Fluglage (6) nach einem der Ansprüche 1 bis 6 umzusetzen.

**8.** Raumschiff, **dadurch gekennzeichnet, dass** es mindestens eine Ausrüstung (0) nach Anspruch 7 aufweist.

**Claims**

**1.** A method for estimating attitude (6) of a spacecraft fitted with a star tracker (1) and an onboard star catalogue (2), comprising calibration of spatial errors, said method comprising a step, so called third step (9) consisting of expressing the difference in interstellar angular distances (3) measured by the star tracker (1) in axes relative to said star tracker (1) and in interstellar angular distances (4) calculated from information of the onboard star catalogue (2), and being **characterized in that**, for calibration of spatial errors, it comprises the steps (7, 9, 10) consisting of:

- first step (7): modeling the spatial errors on the scale of the pixel and of the view field of the star tracker (1),
- second step (8): partitioning the view field into elementary zones, each zone being linked to a spatial error value at the view field scale and a value of spatial error amplitude at the pixel scale,
- fourth step (10): using an estimation filter to realign a state vector formed by the amplitudes of the spatial errors from the calculated difference in interstellar distances (4) and measured interstellar distances (3),

the first three steps (7, 8, 9) being interchangeable.

**2.** The method according to claim 1, **characterized in that** expression of the difference in interstellar angular distances (3) measured by the star tracker (1) in axes relative to said star tracker (1) and in interstellar angular distances (4) calculated from information of the onboard star catalogue (2) consists of expressing the difference in scalar products of measured star directions and scalar products of star directions calculated from catalogue information.

**3.** The method according to one of claims 1 and 2, **characterized in that** the spatial errors at the view field scale are of form:

$$\vec{\varepsilon}_{FOV}(x, y) = \begin{bmatrix} B_x(x, y) \\ B_y(x, y) \end{bmatrix},$$

where $B_x$ and $B_y$ are continuous functions.

**4.** The method according to one of claims 1 to 3, **characterized in that** the spatial errors at the pixel scale are of form:

$$\vec{\varepsilon}_{pixel}(x, y) = \begin{bmatrix} A_x(x, y)\sin(2\pi \dfrac{x}{p_x}) \\ A_y(x, y)\sin(2\pi \dfrac{y}{p_y}) \end{bmatrix},$$

where $A_x$ and $A_y$ are the amplitudes of the error at x and y and $p_x$, $p_y$ the pixel sizes at x and y, x and y representing the position of the stars in the pixel.

**5.** The method according to one of claims 1 to 4, **characterized in that** the estimation filter (10) used is a filter of recursive least squares or constant gain Kalman type.

6. The method according to one of claims 1 to 5, **characterized in that** the realignment equation to the pitch k, k ranging from 1 to the number of interstellar distances, is:

$$X_{k+1} = X_k + K_k H_k Y_k \quad with \quad H_k = \frac{\partial Y_k}{\partial X}, K_k = PH_k^T (H_k PH_k^T + R)^{-1},$$

where $X_k$ is the state vector formed by the spatial errors,
$Y_k$ the vector composed of the differences in measured (3) and calculated (4) interstellar distances,
$H_k$ the observation matrix,
P the covariance matrix of the estimated state,
R the covariance matrix of interstellar distances,
$K_k$ the Kalman matrix.

7. Equipment (0) for a spacecraft, **characterized in that** it comprises means capable of executing a method for estimating attitude (6), according to one of claims 1 to 6.

8. A spacecraft **characterized in that** it comprises at least one item of equipment (0) according to claim 7.

## FIG. 1

## FIG. 2

## FIG. 3

## FIG. 4

# FIG. 5

```
                              ┌──────────────────────────┐
                              │ DISTANCES INTER-ÉTOILES   │ ─── 14
                              │ MESURÉES ET CALCULÉES     │
                              └──────────────────────────┘
                                          │
                                          ▼
┌──────────────────────────┐   ┌──────────────────────────┐
│ ÉLIMINATION DE L'ÉTOILE   │   │ CALCUL DES BIAIS PONCTUELS│ ─── 15
│ LAPLUS BIAISÉE            │   │ MONO-ÉTOILE               │
└──────────────────────────┘   └──────────────────────────┘
18                17                        │
                                            ▼
                              ╱────────────────────────╲
                        NON  ╱   TOUS LES BIAIS          ╲  ─── 16
                             ╲   SONT-ILS INFÉRIEURS      ╱
                              ╲  AU SEUIL ?              ╱
                               ╲────────────────────────╱
                                          │ OUI
                                          ▼
                              ┌──────────────────────────┐
                              │ CALCUL DES                │ ─── 20
                              │ QUATERNIONS D'ATTITUDE    │
                              └──────────────────────────┘
```

## FIG. 6

| Nombre d'étoiles n | Performance d'estimation du biais (3σ) | |
|---|---|---|
| | x | y |
| 5 | 30.5 | 28.5 |
| 10 | 19.6 | 18.7 |
| 20 | 12.9 | 12.8 |
| 40 | 9.1 | 8.6 |

## FIG. 7

| | | | Probabilités (%) | | |
|---|---|---|---|---|---|
| Seuil de rejet | Bx ('') | By ('') | De rejeter la bonne étoile | De rejeter une mauvaise étoile | De ne rejeter aucune étoile |
| 30'' | 90 | 0 | 99.9 | 0.1 | 0.0 |
| 50'' | 90 | 0 | 99.9 | 0.1 | 0.0 |
| 70'' | 90 | 0 | 96.52 | 0.16 | 3.32 |
| 30'' | 90 | 90 | 99.9 | 0.1 | 0.0 |
| 50'' | 90 | 90 | 99.8 | 0.2 | 0.0 |
| 70'' | 90 | 90 | 99.9 | 0.1 | 0.0 |

## FIG. 8

| Seuil de rejet | Bx ('') | By ('') | Probabilités (%) | | |
| --- | --- | --- | --- | --- | --- |
| | | | De rejeter la bonne étoile | De rejeter une mauvaise étoile | De ne rejeter aucune étoile parmi n |
| 30'' | 60 | 0 | 98.5 | 1.3 | 0.2 |
| 30'' | 30 | 0 | 50.7 | 17.2 | 32.1 |
| 50'' | 60 | 0 | 81.7 | 0.7 | 17.6 |
| 50'' | 30 | 0 | 5.3 | 0.4 | 94.4 |
| 70'' | 60 | 0 | 21.0 | 0.1 | 78.9 |
| 70'' | 30 | 0 | 0.0 | 0.1 | 99.9 |

## FIG. 9

| Seuil de rejet | Bx ('') | By ('') | Probabilités (%) | |
| --- | --- | --- | --- | --- |
| | | | De rejeter une étoile | De ne rejeter aucune étoile parmi n |
| 30'' | 0 | 0 | 3.24% | 74.1% |
| 50'' | 0 | 0 | 0.00 | 100.0 |
| 70'' | 0 | 0 | 0.00 | 100.0 |

**EP 2 105 380 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6047226 A

- US 6272432 B

**Littérature non-brevet citée dans la description**

- **MALAK A. SAMMAN et al.** *Prédictive centroiding for single and multiple FOVs star trackers,* 31 Janvier 2002

- **BRADY T. et al.** Ground validation of the inertial stellar compass. *IEEE Aerospace Conference Proceedings,* 2004